# EUROPÄISCHE PATENTSCHRIFT

(11) **EP 4 399 496 B1**
(45) Veröffentlichungstag und Bekanntmachung des Hinweises auf die Patenterteilung: **01.10.2025**
(21) Anmeldenummer: 22765493.6
(22) Anmeldetag: 12.08.2022
(51) Int. Cl.: G01F 1/84

(54) **VIBRONISCHER MESSAUFNEHMER ZUR MASSEDURCHFLUSS- UND DICHTEMESSUNG**
VIBRONIC TRANSDUCER FOR MASS FLOW AND DENSITY MEASUREMENTS
TRANSDUCTEUR VIBRONIQUE POUR MESURER DU DÉBIT MASSIQUE ET DE LA MASSE VOLUMIQUE

(30) Priorität: 09.09.2021 DE 102021123412
(43) Veröffentlichungstag der Anmeldung: 17.07.2024
(73) Patentinhaber: Endress+Hauser Flowtec AG, 4153 Reinach (CH)
(72) Erfinder: ZHU, Hao, 85354 Freising (DE)
(74) Vertreter: Endress + Hauser Group Services (Deutschland) AG+Co. KG
(86) Internationale Anmeldenummer: PCT/EP2022/072689
(87) Internationale Veröffentlichungsnummer: WO 2023/036558

(56) Entgegenhaltungen:
- EP-A2- 0 919 793
- DE-A1- 102015 221 350
- DE-A1- 102017 012 058
- US-A1- 2015 377 673

## Beschreibung

Die vorliegende Erfindung betrifft einen vibronischen Messaufnehmer zur Massedurchfluss- und Dichtemessung mit exzentrischer Anregung.

Die Dichte eines im Messrohr geführten Mediums wird mittels eines vibronischen Messaufnehmers auf Basis der Eigenfrequenzen von Schwingungsmoden des Messrohrs ermittelt. Im Idealfall ist das Medium inkompressibel, sodass das Medium den Schwingungen des Messrohrs folgt. Wenn das Medium jedoch kompressibel wird, beispielweise aufgrund einer Gasbeladung des Mediums, können die Massedurchflussmessung und die Dichtemessung fehlerbehaftet sein, da das Medium beginnt, gegenüber dem Messrohr zu schwingen. Der Einfluss dieses so genannten Resonatoreffekts kann durch Erfassen der Eigenfrequenzen zweier Schwingungsmoden korrigiert werden, wobei im Wesentlichen eine Schallgeschwindigkeit des Mediums ermittelt wird, für die sich aus den beiden Eigenfrequenzen übereinstimmende Dichtemesswerte für das Medium ergeben. Einzelheiten dazu sind beispielsweise in DE 10 2015 122 661 A1 offenbart. Üblicherweise werden hierzu die erste und zweite symmetrische Schwingungsmode angeregt, also die f1 Mode und die f3 Mode. US 2015 377 673 A1 offenbart ebenfalls einen Coriolis-Durchflussmesser dessen Messrohr in zwei Schwingungsmoden anzuregen ist. Die Eigenfrequenz der zweiten symmetrischen Schwingungsmode f3 kann aber bei manchen Messaufnehmern so hoch sein, dass sie im Bereich der Resonanzfrequenz des Mediums liegt, so dass eine stabile Anregung der zweiten symmetrischen Schwingungsmode nicht zuverlässig gewährleistet werden kann. In diesem Fall ist die erste antisymmetrische Schwingungsmode eine attraktive Alternative, da die Eigenfrequenz dieser Mode niedriger ist, und somit ein größerer Abstand zur Resonanzfrequenz des Messrohrs zu erwarten ist.

Die noch unveröffentlichte Patentanmeldung DE 10 2020 123 999.8 offenbart eine vibronische Messanordnung mit einem einzigen, leicht exzentrisch angeordneten Erreger, der geeignet ist, neben den symmetrischen auch die antisymmetrischen Moden anzuregen. Dies erfüllt seinen Zweck, ist aber insofern problematisch, als Anregung auch der ersten symmetrischen Schwingungsmode auch einen exzentrischen Anteil hat der einen insbesondere dämpfungsabhängigen Nullpunktfehler bei der Durchflussmessung bewirkt. Dieser Nullpunktfehler kann zwar ermittelt und in einer Korrektur berichtigt werden, aber das bedeutet zusätzlichen Aufwand und ggf. Kompromisse beim Betrieb des Messgerätes.

US 2003/0131669 A1 offenbart einen vibronischen Messaufnehmer mit zwei exzentrisch angeordneten Erregeranordnungen, die mit großem Abstand zueinander symmetrisch bezüglich der Messrohrmitte positioniert sind. Die Auswahl der anzuregenden Moden erfolgt über die Frequenz und die Phasenbeziehung der Erregersignale, mit denen die beiden Erreger beaufschlagt werden. Abweichungen in der Phasenbeziehung bzw. ungleiche Amplituden der Erregersignale haben zwingend die Anregung anderer, unerwünschter Moden zur Folge. Dies kann zu unerkannten Messfehlern führen.

Es ist daher die Aufgabe der Erfindung, hier Abhilfe zu schaffen.

Der erfindungsgemäße vibronische Messaufnehmer umfasst: einen Oszillator mit mindestens einem ersten Messrohr zum Führen eines Mediums; mindestens eine elektrodynamische Erregeranordnung zum Anregen des Oszillators zu Biegeschwingungen des mindestens einen ersten Messrohrs; mindestens eine einlaufseitige Sensoranordnung zum Erfassen der Biegeschwingungen des mindestens einen ersten Messrohrs; mindestens eine auslaufseitige Sensoranordnung zum Erfassen der Biegeschwingungen des mindestens einen ersten Messrohrs; und eine Mess- und Betriebsschaltung, welche dazu eingerichtet ist, die elektrodynamische Erregeranordnung mit mindestens einem Erregersignal zu beaufschlagen, und Sensorsignale der einlaufseitigen und auslaufseitigen Sensoranordnungen zu erfassen, und auf Basis der Sensorsignale einen Dichtemesswert und/oder einen Massedurchflussratenmesswert zu ermitteln, wobei die elektrodynamische Erregeranordnung eine erste Erregerbaugruppe aufweist, die an dem mindestens einen ersten Messrohr befestigt ist, und eine zweite Erregerbaugruppe, bezüglich der das mindestens eine erste Messrohr zum Schwingen anzuregen ist, wobei die erste Erregerbaugruppe einen Schwerpunkt aufweist, der bis auf Fertigungstoleranzen in einer Messrohrquerebene liegt, welche senkrecht zu dem mindestens einen ersten Messrohr verläuft, und bezüglich welcher das mindestens eine erste Messrohr einen im Wesentlichen spiegelsymmetrischen Verlauf aufweist; wobei die elektrodynamische Erregeranordnung einen ersten elektrodynamischen Erreger umfasst, wobei die Erregeranordnung einen zweiten elektrodynamischen Erreger und mindestens einen ersten Ausgleichsmassenkörper umfasst, wobei die erste Erregerbaugruppe eine erste Komponente des ersten elektrodynamischen Erregers und eine erste Komponente des zweiten elektrodynamischen Erregers und den ersten Ausgleichsmassenkörper umfasst, wobei die zweite Erregerbaugruppe eine zweite Komponente des ersten elektrodynamischen Erregers und eine zweite Komponente des zweiten elektrodynamischen Erregers umfasst, wobei der erste elektrodynamische Erreger dazu eingerichtet ist, eine Erregerkraft auf das mindesten eine erste Messrohr auszuüben, die zwischen der ersten und der zweiten Komponente des ersten elektrodynamischen Erregers wirkt, wobei ein effektives Zentrum der ersten Erregerkraft in der Messrohrquerebene (EQ) lokalisiert ist, wobei der zweite elektrodynamische Erreger dazu eingerichtet ist, eine zweite Erregerkraft auf das mindesten eine Messrohr auszuüben, die zwischen der ersten und der zweiten Komponente des zweiten elektrodynamischen Erregers wirkt, wobei ein effektives Zentrum der zweiten Erregerkraft außerhalb der Messrohrquerebene lokalisiert ist, wobei die Mess- und Betriebsschaltung, dazu eingerichtet ist nur den ersten elektrodynamischen Erreger mit einem ersten Erregersignal zu beaufschlagen, dessen Frequenz einer aktuellen Eigenfrequenz einer symmetrischen Schwingungsmode des Oszillators entspricht, und wobei die Mess- und Betriebsschaltung (70), dazu eingerichtet ist, nur den zweiten elektrodynamischen Erreger mit einem zweiten Erregersignal zu beaufschlagen, dessen Frequenz einer aktuellen Eigenfrequenz einer antisymmetrischen Schwingungsmode des Oszillators entspricht.

Das effektive Zentrum der Erregerkraft liegt bei einem Erreger, der eine koaxiale Anordnung eines rotationssymmetrischen Magneten mit einer rotationssymmetrischen Spule aufweist, auf der gemeinsamen Achse der Rotationssymmetrie. Bei anderen Gestaltungen ist für einen elektrodynamischen Erreger das Zentrum der Erregerkraft als Schwerpunkt des Integrals der Kraftdichte zwischen Magnet und Spule zu ermitteln.

In einer Weiterbildung der Erfindung weist die erste Komponente des zweiten elektrodynamischen Erregers einen ersten Schwerpunkt auf, wobei der erste Ausgleichsmassenkörper einen zweiten Schwerpunkt aufweist, wobei ein Abstand eines gemeinsamen Schwerpunkts des ersten Schwerpunkts und des zweiten Schwerpunkts von der Messrohrquerebene nicht mehr als 5%, insbesondere nicht mehr als 2% des Abstands des ersten Schwerpunkts vom zweiten Schwerpunkt beträgt.

In einer Weiterbildung der Erfindung beträgt die Gesamtmasse der ersten Komponente des zweiten elektrodynamischen Erregers und des ersten Ausgleichsmassenkörpers, nicht mehr als das Einfache, insbesondere nicht mehr als die Hälfte der Masse der ersten Komponente des ersten elektrodynamischen Erregers.

In einer Weiterbildung der Erfindung weist das mindestens eine erste Messrohr eine freie Schwingungslänge auf, die sich zwischen einer einlaufseitigen Fixierung des Messrohrs und einer auslaufseitigen Fixierung des Messrohrs erstreckt, wobei das Zentrum der zweiten Erregerkraft FE2 nicht weniger als 1% der freien Schwingungslänge und nicht mehr als 10% der freien Schwingungslänge von der Messrohrquerebene (EQ) beabstandet ist.

In einer Weiterbildung der Erfindung weist eine der Komponenten des ersten elektrodynamischen Erregers eine erste Erregerspule auf, wobei eine der Komponenten des zweiten elektrodynamischen Erregers eine zweite Erregerspule auf, wobei die Induktivität der ersten Erregerspule nicht weniger als das Doppelte, insbesondere nicht weniger als das Vierfache der Induktivität der zweiten Erregerspule beträgt.

In einer Weiterbildung der Erfindung weist die andere der Komponenten des ersten elektrodynamischen Erregers einen ersten Magneten auf, wobei die andere Komponenten des zweiten elektrodynamischen Erregers einen zweiten Magneten umfasst, wobei eine orthogonale Projektion des ersten Magneten und des zweiten Magneten auf eine Ebene die senkrecht zur Schwingungsrichtung des mindestens einen Messrohrs verläuft, jeweils mit einer orthogonalen Projektion der ersten Erregerspule bzw. der zweiten Erregerspule auf diese Ebene überlappt.

In dieser Weiterbildung der Erfindung beträgt die Fläche der überlappenden orthogonalen Projektionen der Komponenten des ersten elektrodynamischen Erregers mindestens das Doppelte, beispielsweise mindestens das Dreifache und insbesondere mindestens das Vierfache der Fläche der überlappenden orthogonalen Projektionen der Komponenten des zweiten elektrodynamischen Erregers.

In einer Weiterbildung der Erfindung beträgt der Abstand des zweiten elektrodynamischen Erregers von der ihm nächsten Sensoranordnung nicht weniger als das Vierfache, insbesondere nicht weniger als das Achtfache des Abstands des zweiten elektrodynamischen Erregers von dem ersten elektrodynamischen Erreger.

In einer Weiterbildung der Erfindung verläuft eine Hauptträgheitsachse der ersten Erregerbaugruppe in der Messrohrquerebene (EQ).

In einer Weiterbildung der Erfindung ist die erste Erregerbaugruppe mittels einer Fügestelle an dem mindestens einen Messrohr befestigt, wobei die Messrohrquerebene (EQ), durch einen Schwerpunkt der Fügestelle verläuft.

In einer Weiterbildung der Erfindung weist die erste Erregerbaugruppe einen ersten Trägerkörper auf, an welchem die zweite Erregerspule und der mindestens eine erste Ausgleichsmassenkörper angeordnet sind, wobei der erste Trägerkörper symmetrisch bezüglich der Messrohrquerebene EQ ausgebildet ist.

In einer Weiterbildung der Erfindung weist der Oszillator weiterhin ein zweites Messrohr auf, wobei das erste Messrohr und das zweite Messrohr bezüglich einer Messaufnehmerlängsebene spiegelsymmetrisch zueinander verlaufen, wobei die Messaufnehmerlängsebene senkrecht zur Messrohrquerebene EQ verläuft.

In einer Weiterbildung der Erfindung ist die zweite Erregerbaugruppe an dem zweiten Messrohr gegenüber der ersten Erregerbaugruppe befestigt, wobei der Schwerpunkt der zweiten Erregerbaugruppe bis auf Fertigungstoleranzen in der Messrohrquerebene EQ liegt.

In einer Weiterbildung der Erfindung verläuft eine Hauptträgheitsachse der zweiten Erregerbaugruppe in der Messrohrquerebene EQ.

In einer Weiterbildung der Erfindung weist die zweite Erregerbaugruppe einen zweiten Trägerkörper auf, an welchem der zweite Magnet und ein zweiter Ausgleichsmassenkörper angeordnet sind, wobei der zweite Trägerkörper symmetrisch bezüglich der Messrohrquerebene EQ ausgebildet ist.

Wenn der Messaufnehmer nur ein einziges Messrohr umfasst, ist gemäß einer Weiterbildung der Erfindung die Erregerbaugruppe, welche die Magneten trägt, an dem Messrohr angeordnet, während die Erregerbaugruppe, welche die Spulen, trägt an einem vergleichsweise steifen Trägerrohr bzw. Rahmen des Messaufnehmers fixiert ist. Das Messrohr ist mit dieser Anordnung bezüglich des Trägerrohrs bzw. Rahmens zum Schwingen anzuregen. Auf diese Weise entfällt die Verkabelung entlang des Messrohrs. Entsprechendes gilt für die Anordnung der Sensoren.

In einer Weiterbildung der Erfindung ist die Mess- und Betriebsschaltung dazu eingerichtet, die erste symmetrische Schwingungsmode und die erste antisymmetrische Schwingungsmode anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist.

Die Erfindung wird nun anhand der in den Zeichnungen dargestellten Ausführungsbeispiele näher erläutert.

Es zeigt:
Fig. 1a: eine Darstellung eines Ausführungsbeispiels eines erfindungsgemäßen Messaufnehmers;
Fig. 1b:eine schematische Seitenansicht einer ersten Erregerbaugruppe des Messaufnehmers aus Fig. 1a aus Richtung der zweiten Erregerbaugruppe betrachtet;
Fig. 1c: eine schematische Seitenansicht einer zweiten Erregerbaugruppe des Messaufnehmers aus Fig. 1a aus Richtung der ersten Erregerbaugruppe betrachtet;
Fig. 2: ein Diagramm zu den Schwingungsmoden eines Messaufnehmers; und
Fig. 3: ein Flussdiagramm zur Bestimmung der Dichte und des Massendurchflusses eines kompressiblen Mediums mit dem erfindungsgemäßen Messaufnehmer.

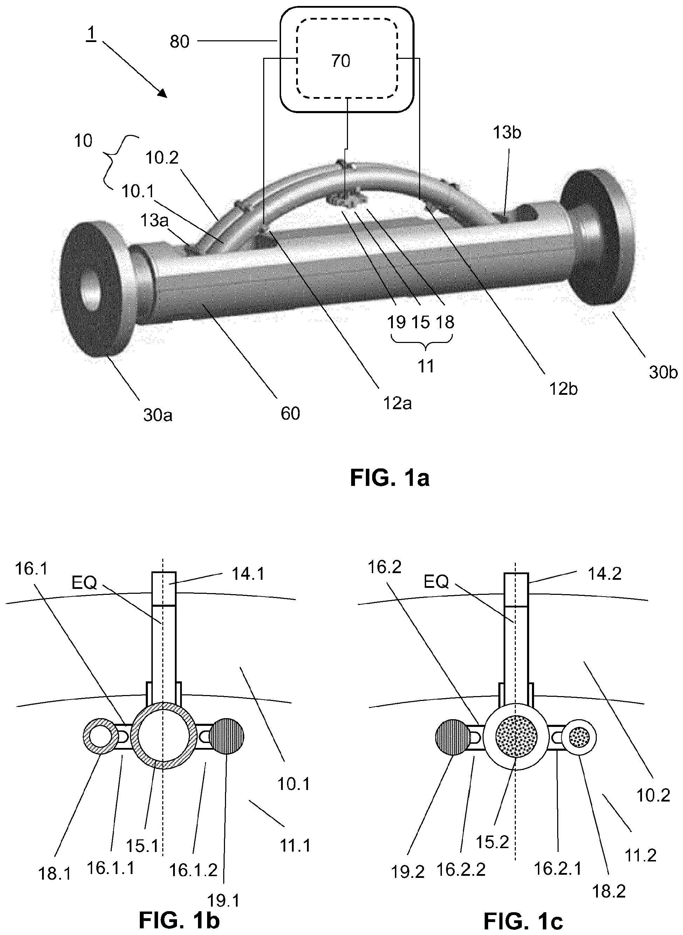

Der in Fig. 1a dargestellte Messaufnehmer 1 zum Messen von Massedurchfluss und Dichte umfasst einen Oszillator 10 mit zwei im Wesentlichen parallel verlaufenden, gebogenen Messrohren 10.1, 10.2 sowie eine Erregeranordnung 11, die zwischen den Messrohren 10 wirkt, um diese zu Biegeschwingungen gegeneinander anzuregen. Weiterhin weist der Messaufnehmer 1 zwei Sensoranordnungen 12a, 12b auf, welche symmetrisch, zur Messrohrquerebene angeordnet sind, um die Messrohrschwingungen als Relativbewegung der gegeneinander schwingenden Messrohre 10.1, 10.2 zu erfassen. Die Messrohre 10.1, 10.2 erstrecken sich zwischen zwei (nicht dargestellten) Strömungsteilern, welche die Messrohre 10.1, 10.2 strömungstechnisch zusammenfassen und jeweils mit einem Flansch 30a, 30b verbunden sind, der zum Einbau des Messaufnehmers 1 in eine Rohrleitung dient. Die Messrohre 10.1, 10.2 sind zudem einlaufseitig und auslaufseitig mit jeweils mindestens einer Koppelplatte 13a, 13b miteinander verbunden, wobei durch die Koppelplatten die 13a, 13b die freie Schwingungslänge I der Messrohre 10.1, 10.2 definiert ist. Zwischen den Strömungsteilern erstreckt sich ein starres Trägerrohr 60, welches die Strömungsteiler miteinander verbindet, um Schwingungen der Strömungsteiler gegeneinander im Frequenzbereich der Biegeschwingungsmoden des Oszillators 10 gegeneinander zu unterdrücken. Das Trägerrohr 60 trägt weiterhin ein hier nur schematisch dargestelltes Elektronikgehäuse 80, in welchem ein Mess- und Betriebsschaltung 70 enthalten ist, welche dazu eingerichtet ist den Messaufnehmer zu betreiben und das erfindungsgemäße Verfahren durchzuführen.

Die Erregeranordnung 11 ist so an den Messrohren 10.1, 10.2 angeordnet, dass der Masseschwerpunkt der Erregerbaugruppe insgesamt in einer Messrohrquerebene EQ liegt, welche die Messrohre senkrecht schneidet, und bezüglich welcher jedes der Messrohre einen spiegelsymmetrischen Verlauf aufweist. Die Erregeranordnung umfasst einen ersten elektrodynamischen Erreger 15, dessen Erregerkraft symmetrisch zur Messrohrquerebene zwischen den Messrohren wirkt, um symmetrische Biegeschwingungsmoden der Messrohre 10.1, 10.2 anzuregen. Weiterhin umfasst die Erregeranordnung einen zweiten elektrodynamischen Erreger 18, dessen Erregerkraft parallel zur Messrohrquerebene und etwa 5% in Längsrichtung der Messrohre versetzt zur Messrohrquerebene zwischen den Messrohren wirkt, um antisymmetrische Biegeschwingungsmoden der Messrohre 10.1, 10.2 anzuregen. Zudem weist die Erregeranordnung eine Ausgleichsmasse 19, zum Ausgleich der Masse des zweiten elektrodynamischen Erregers 18, um den Masseschwerpunkt der Erregeranordnung in der Messrohrquerebene zu halten.

Einzelheiten zur Erregeranordnung 11 werden nun anhand der Fign. 1b und 1c erläutert.

Der Erregeranordnung 11 und die Sensoranordnungen 12a, 12b weisen, wie üblich elektrodynamische Wandler auf, wobei für die Wandler an einem der Messrohre jeweils ein Magnet angeordnet ist und an dem anderen eine Spule. Dies Prinzip ist an sich bekannt und braucht hier nicht näher erläutert zu werden. Die Besonderheit des erfindungsgemäßen Messaufnehmers liegt darin, dass die Erregeranordnung 11 neben der Anregung symmetrischer Biegeschwingungsmoden auch eine Anregung antisymmetrischer Biegeschwingungsmoden des Oszillators bzw. seiner Messrohre ermöglicht und dennoch hinsichtlich ihrer Masseverteilung ausbalanciert ist. Die Erregeranordnung 11 umfasst dazu eine erste Erregerbaugruppe 11.1 an einem ersten Messrohr 10.1, wie in Fig. 1b dargestellt ist, und eine zweite Erregerbaugruppe 11.2, die der ersten Erregerbaugruppe 11.1 gegenüberliegend an einem zweiten Messrohr 10.2 angeordnet ist, wie Fig. 1c zeigt.

Die in Fig. 1b dargestellte erste Erregerbaugruppe 11.1 umfasst ein erstes Ringsegment 14.1 welches das erste Messrohr 10.1 symmetrisch zur Messrohrquerebene teilweise umgreift und mit dem ersten Messrohr 10.1 stoffschlüssig gefügt ist, beispielsweise durch Hartlöten. Das erste Ringsegment 14.1 hält einen insbesondere planaren ersten Trägerkörper 16.1, der im Wesentlichen senkrecht zur Messrohrquerebene verläuft, und symmetrisch zur Messrohrquerebene gestaltet ist. Der erste Trägerkörper 16.1 weist einen geschlitzten ersten Erregerkomponententräger 16.1.1 und einen geschlitzten ersten Ausgleichsmassenträger 16.1.2 auf und trägt in seinem Zentrum eine erste Erregerspule 15.1 des ersten Elektrodynamischen Erregers 15. Der erste Erregerkomponententräger 16.1.1 trägt eine zweite Erregerspule 18.1 des zweiten elektrodynamischen Erregers 18, die mittels eines Zapfens, der in einem Schlitz des ersten Erregerkomponententrägers 16.1.1 eingreift, positioniert und beispielsweise durch Löten, Kleben oder Schrauben an letzterem fixiert ist. Der erste Ausgleichsmassenträger 16.1.2 trägt einen ersten Ausgleichsmassenkörper 19.1, der mittels eines Zapfens, der in einem Schlitz des ersten Ausgleichsmassenträgers 16.1.2 eingreift, positioniert und beispielsweise durch Löten, Kleben oder Schrauben an letzterem fixiert ist. Der erste Ausgleichsmassenkörper 19.1 ist so auf die Masse der zweiten Erregerspule 18.1 abgestimmt, dass der gemeinsame Schwerpunkt in der Messrohrquerebene liegt. Insbesondere weisen der erste Ausgleichsmassenkörper 19.1 und die zweite Erregerspule 18.1 die gleiche Masse auf. Eine Hauptträgheitsachse der ersten Erregerbaugruppe 11.1 verläuft in der Messrohrquerebene EQ.

Die in Fig. 1c dargestellte zweite Erregerbaugruppe 11.2 umfasst ein zweites Ringsegment 14.2 welches das zweite Messrohr 10.2 symmetrisch zur Messrohrquerebene teilweise umgreift und mit dem zweiten Messrohr 10.2 stoffschlüssig gefügt ist, beispielsweise durch Hartlöten. Das zweite Ringsegment 14.2 hält einen insbesondere planaren zweiten Trägerkörper 16.2, der im Wesentlichen senkrecht zur Messrohrquerebene verläuft, und symmetrisch zur Messrohrquerebene gestaltet ist. Der zweite Trägerkörper 16.2 weist einen geschlitzten zweiten Erregerkomponententräger 16.2.1 und einen geschlitzten zweiten Ausgleichsmassenträger 16.2.2 auf und trägt in seinem Zentrum einen ersten Erregermagneten 15.2 des ersten Elektrodynamischen Erregers 15. Der zweite Erregerkomponententräger 16.2.1 trägt einen zweiten Erregermagneten 18.2 des zweiten elektrodynamischen Erregers 18, der mittels eines Zapfens, der in einem Schlitz des zweiten Erregerkomponententrägers 16.2.1 eingreift, positioniert und beispielsweise durch Löten, Kleben oder Schrauben an letzterem fixiert ist. Der zweite Ausgleichsmassenträger 16.2.2 trägt einen zweiten Ausgleichsmassenkörper 19.2, der mittels eines Zapfens, der in einem Schlitz des zweiten Ausgleichsmassenträgers 16.2.2 eingreift, positioniert und beispielsweise durch Löten, Kleben oder Schrauben an letzterem fixiert ist. Der zweite Ausgleichsmassenkörper 19.2 ist so auf die Masse des zweiten Erregermagneten 18.2 abgestimmt, dass der gemeinsame Schwerpunkt in der Messrohrquerebene EQ liegt. Insbesondere weisen der zweite Ausgleichsmassenkörper 19.2 und der zweite Erregermagnet 18.2 die gleiche Masse auf. Eine Hauptträgheitsachse der zweiten Erregerbaugruppe 11.2 verläuft in der Messrohrquerebene EQ.

Das zweite Ringsegment 14.2 ist insbesondere baugleich mit dem ersten Ringsegment 14.1 und der zweite Trägerkörper 16.2 ist insbesondere baugleich mit dem ersten Trägerkörper 16.1.

Die Hauptträgheitsachsen der ersten Erregerbaugruppe 11.1 und der zweiten Erregerbaugruppe 11.2 in der Messrohrquerebene verlaufen parallel zueinander und insbesondere spiegelsymmetrisch zueinander bezüglich einer Messaufnehmerlängsebene die zwischen den beiden Messrohren 10.1, 10.2 verläuft, wobei die beiden Messrohre bezüglich der Messaufnehmerlängsebene zueinander spiegelsymmetrisch angeordnet sind.

Die erste Erregerspule 15.1 und die zweite Erregerspule 18.1 sind jeweils dazu eingerichtet, von der Mess- und Betriebsschaltung 70 mit einem für die Erregerspule spezifischen Wechselstromsignal gespeist zu werden, dessen Frequenz der momentanen Eigenfrequenz einer anzuregenden Biegeschwingungsmode entspricht. Für die erste Erregerspule 15.1 sind dies die Frequenzen der symmetrischen Biegeschwingungsmoden und für zweite Erregerspule 18.1 sind dies die Frequenzen der antisymmetrischen Biegeschwingungsmoden. Selbstverständlich können auch Wechselstromsignale verschiedener Frequenzen der jeweiligen Symmetrieklasse überlagert werden, beispielsweis mit den momentanen Eigenfrequenzen der ersten symmetrischen und der zweiten symmetrischen Biegeschwingungsmode für die erste Erregerspule 15.1 und mit den momentanen Eigenfrequenzen der ersten antisymmetrischen Biegeschwingungsmode und der zweiten antisymmetrischen Biegeschwingungsmode für die zweite Erregerspule 18.1. Die resultierenden Magnetfelder bewirken alternierende anziehende und abstoßende Kräfte auf jeweils den Erregermagnetenten 15.2 18.2, welcher der felderzeugenden Erregerspule gegenüberliegt, wodurch die beiden Messrohre 10.1, 10.2 des Oszillators gegeneinander in Schwingungen versetzt werden, in den selektierten Biegeschwingungsmoden.

Die Erregermagneten 15.2, 18.2 und die Erregerspulen 15.1, 18.1 sowie die beiden Ausgleichsmassenkörper 19.1, 19.2 sind vorzugsweise rotationssymmetrisch gestaltet, wobei die Rotationsachse im Wesentlichen in Richtung der Schwingungen der Messrohre verläuft. Insbesondere weisen die Erregermagneten 15.2, 18.2, die Erregerspulen 15.1, 18.1, sowie die beiden Ausgleichsmassenkörper 19.1, 19.2 zumindest abschnittsweise ein Zylindersymmetrie auf.

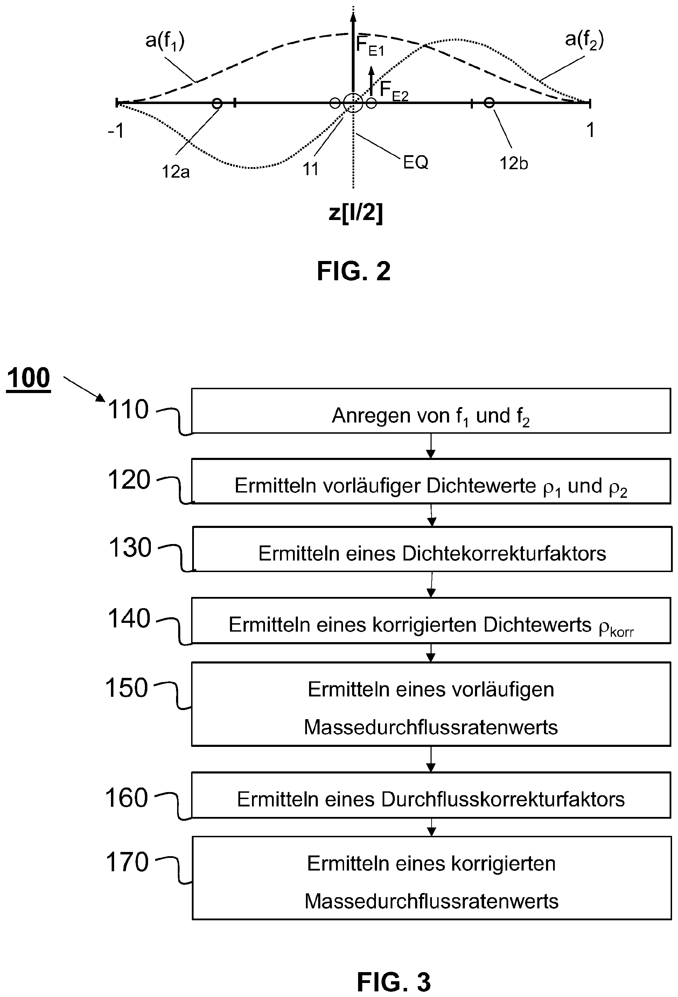

Die modenabhängige Auslenkung eines Messrohrs ist in Fig. 2 schematisch dargestellt. Hierbei zeigt die Kurve a(f₁) die Biegelinie eines Messrohrs für die erste symmetrische Schwingungsmode, die auch Antriebsmode oder f₁-Mode genannt wird. Die Kurve a(f₂) zeigt die Biegelinie des Messrohrs für die erste antisymmetrische Schwingungsmode, in der das Messrohr durch die Corioliskräfte ausgelenkt wird, wenn durch das mit der ersten symmetrischen Schwingungsmode schwingende Messrohr ein Massestrom fließt. Die erste antisymmetrische Schwingungsmode weist in Längsrichtung des Messrohrs in der Rohrmitte bei z=0 einen Schwingungsknoten auf. Ein Erreger an dieser Position wäre nicht in der Lage eine Schwingung der ersten antisymmetrischen Schwingungsmode anzuregen. Daher ist der zweite elektrodynamische Erreger 18 hier so positioniert, dass seine Erregerkraft F_{E2} um etwa um 2,5% der Messrohrlänge also etwa 5% der halben Messrohrlänge gegenüber der Messrohrquerebene versetzt zwischen den Messrohren wirkt. Die Messrohrlänge ist hierbei die Länge einer dem gebogenen Verlauf eines Messrohrs folgenden Messrohrmittenlinie zwischen den in Fig. 1a dargestellten Koppelplatten 13a, 13b. In der versetzten Position kann der zweite elektrodynamische Erreger 18 die erste antisymmetrische Schwingungsmode anregen, wenn er eine Erregerkraft F_{E2} mit der Resonanzfrequenz der ersten antisymmetrischen Schwingungsmode aufprägt.

Die erste antisymmetrische Schwingungsmode muss nur so weit angeregt werden, dass der Wert ihrer Eigenfrequenz ermittelt werden kann, was bereits bei einer minimalen Schwingungsamplitude möglich ist. Daher kann der zweite elektrodynamische Erreger 18 viel kleiner und leichter dimensioniert sein als der erste elektrodynamische Erreger 15, mit welchem die erste symmetrische Biegeschwingungsmode, also die so genannte Biegeschwingungsnutzmode anzuregen ist.

Die Positionen der Sensoranordnungen 12a, 12b sind in Längsrichtung z symmetrisch zur Messrohrmitte der Messrohre so gewählt, dass Auslenkungen der Schwingungssensoren sowohl bei Schwingungen in der Antriebsmode als auch der ersten antisymmetrischen Schwingungsmode ein ausreichendes Messsignal bewirken.

Die Mess- und Betriebsschaltung ist dazu eingerichtet, die erste symmetrische Schwingungsmode und die erste antisymmetrische Schwingungsmode durch speisen der jeweils zugehörigen Erregerspule mit einem Erregerstrom anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist. Der Einfluss dieses so genannten Resonatoreffekts kann durch Erfassen der Eigenfrequenzen zweier Schwingungsmoden korrigiert werden, wobei im Wesentlichen eine Schallgeschwindigkeit des Mediums ermittelt wird, für die sich aus den beiden Eigenfrequenzen übereinstimmende Dichtemesswerte für das Medium ergeben. Einzelheiten dazu sind beispielsweise in DE 10 2015 122 661 A1 offenbart, wobei nach der dort beschriebenen Lehre die erste und zweite symmetrische Schwin**gungsmode** auszuwerten sind. Anhand von Fig. 3 wird nun das Verfahren 100 erläutert, zu dessen Durchführung die Mess- und Betriebsschaltung eingerichtet ist. In einem ersten Schritt 110 werden die erste symmetrische und die erste antisymmetrische Schwingungsmode angeregt, also die f₁ Mode und die f₂ Mode. In einem zweiten Schritt 120 wird auf Basis der Eigenfrequenzen der angeregten Moden jeweils ein vorläufiger Dichtemesswert ρ₁, ρ₂, ermittelt. Bei inkompressiblen Medien stimmen die beiden Dichtemesswert im Wesentlichen überein. Wenn Abweichungen gegeben sind, wird im nächsten Schritt 130 ein Korrekturfaktor bestimmt, der von der Schallgeschwindigkeit des kompressiblen Mediums abhängt. Dem entsprechend wird, wie in DE 10 2015 122 661 A1 offenbart, zunächst die Schallgeschwindigkeit ermittelt, die zu dem beobachteten Verhältnis der vorläufigen Dichtemesswerte führt. Auf Basis der Schallgeschwindigkeit, und einer der Eigenfrequenzen kann dann ein Dichtefehler und ein Korrekturfaktor ermittelt werden, mit dem dann im nächsten Schritt 140 ein korrigierter Dichtemesswert ρₖₒᵣᵣ bestimmt wird.

Zur Bereitstellung eines korrekten Massedurchflussratenmesswerts wird zunächst ein vorläufiger Massedurchflussratenmesswert bestimmt 150. In einem nächsten Schritt 160 wird auf Basis des Dichtefehlers bzw. Dichtekorrekturfaktors ein Durchflusskorrekturfaktor ermitteln, wie ebenfalls in DE 10 2015 122 661 A1 offenbart ist. In einem letzten Schritt 170 wird ein korrekter Massedurchflussratenmesswert ermittelt, in dem der vorläufige Massedurchflussratenmesswert mit dem Korrekturfaktor korrigiert wird.

## Patentansprüche

1. Vibronischer Messaufnehmer (1), umfassend:
einen Oszillator (10) mit mindestens einem ersten Messrohr (10.1, 10,2) zum Führen eines Mediums;
mindestens eine elektrodynamische Erregeranordnung (11) zum Anregen des Oszillators (10) zu Biegeschwingungen des mindestens einen ersten Messrohrs (10.1, 10,2);
mindestens eine einlaufseitige Sensoranordnung (12a) zum Erfassen der Biegeschwingungen des mindestens einen ersten Messrohrs (10.1, 10,2);
mindestens eine auslaufseitige Sensoranordnung (12b) zum Erfassen der Biegeschwingungen des mindestens einen ersten Messrohrs (10.1, 10,2); und
eine Mess- und Betriebsschaltung (70), welche dazu eingerichtet ist, die elektrodynamische Erregeranordnung (11) mit mindestens einem Erregersignal zu beaufschlagen, und Sensorsignale der einlaufseitigen und auslaufseitigen Sensoranordnungen (12a, 12b) zu erfassen, und auf Basis der Sensorsignale einen Dichtemesswert und/oder einen Massedurchflussratenmesswert zu ermitteln,
wobei die elektrodynamische Erregeranordnung eine erste Erregerbaugruppe (11.1, 11.2) aufweist, die an dem mindestens einen ersten Messrohr (10.1, 10.2) befestigt ist, und eine zweite Erregerbaugruppe (11.2), bezüglich der das mindestens eine erste Messrohr zum Schwingen anzuregen ist, wobei die erste Erregerbaugruppe (11.1, 11.2) einen Schwerpunkt aufweist, der bis auf Fertigungstoleranzen in einer Messrohrquerebene (EQ) liegt, welche senkrecht zu dem mindestens einen ersten Messrohr (10.1, 10.2) verläuft, und bezüglich welcher das mindestens eine erste Messrohr (10.1, 10.2) einen im Wesentlichen spiegelsymmetrischen Verlauf aufweist;
wobei die elektrodynamische Erregeranordnung (11) einen ersten elektrodynamischen Erreger (15) umfasst,
wobei die Erregeranordnung (11) einen zweiten elektrodynamischen Erreger (18) und mindestens einen ersten Ausgleichsmassenkörper (19.1, 19.2) umfasst,
wobei die erste Erregerbaugruppe eine erste Komponente des ersten elektrodynamischen Erregers und eine erste Komponente des zweiten elektrodynamischen Erregers und den ersten Ausgleichsmassenkörper umfasst,
wobei die zweite Erregerbaugruppe eine zweite Komponente des ersten elektrodynamischen Erregers und eine zweite Komponente des zweiten elektrodynamischen Erregers umfasst,
wobei der erste elektrodynamische Erreger (18) dazu eingerichtet ist, eine Erregerkraft (FE1) auf das mindesten eine erste Messrohr (10.1, 10.2) auszuüben, die zwischen der ersten und der zweiten Komponente des ersten elektrodynamischen Erregers wirkt, wobei ein effektives Zentrum der ersten Erregerkraft (FE1) in der Messrohrquerebene (EQ) lokalisiert ist,
wobei der zweite elektrodynamische Erreger dazu eingerichtet ist, eine zweite Erregerkraft (FE2) auf das mindesten eine Messrohr (10.1, 10.2) auszuüben, die zwischen der ersten und der zweiten Komponente des zweiten elektrodynamischen Erregers wirkt, wobei ein effektives Zentrum der zweiten Erregerkraft (FE2) außerhalb der Messrohrquerebene (EQ) lokalisiert ist,
wobei die Mess- und Betriebsschaltung (70) dazu eingerichtet ist, nur den ersten elektrodynamischen Erreger mit einem ersten Erregersignal zu beaufschlagen, dessen Frequenz einer aktuellen Eigenfrequenz einer symmetrischen Schwingungsmode des Oszillators entspricht, und
wobei die Mess- und Betriebsschaltung (70) dazu eingerichtet ist, nur den zweiten elektrodynamischen Erreger mit einem zweiten Erregersignal zu beaufschlagen, dessen Frequenz einer aktuellen Eigenfrequenz einer antisymmetrischen Schwingungsmode des Oszillators entspricht.

2. Messaufnehmer (1) nach Anspruch 1, wobei die erste Komponente des zweiten elektrodynamischen Erregers einen ersten Schwerpunkt aufweist, wobei der erste Ausgleichsmassenkörper einen zweiten Schwerpunkt aufweist, wobei ein Abstand eines gemeinsamen Schwerpunkts des ersten Schwerpunkts und des zweiten Schwerpunkts von der Messrohrquerebene nicht mehr als 5%, insbesondere nicht mehr als 2% des Abstands des ersten Schwerpunkts vom zweiten Schwerpunkt beträgt.

3. Messaufnehmer (1) nach Anspruch 1 oder 2, wobei die Gesamtmasse der ersten Komponente des zweiten elektrodynamischen Erregers und des ersten Ausgleichsmassenkörpers, nicht mehr als das Einfache, insbesondere nicht mehr als die Hälfte der Masse der ersten Komponente des ersten elektrodynamischen Erregers beträgt.

4. Messaufnehmer (1) nach einem der Ansprüche 1 bis 3, wobei das mindestens eine erste Messrohr (10.1, 10.2) eine freie Schwingungslänge aufweist, die sich zwischen einer einlaufseitigen Fixierung des Messrohrs und einer auslaufseitigen Fixierung des Messrohrs (10.1, 10.2) erstreckt, wobei das Zentrum der zweiten Erregerkraft FE2 nicht weniger als 1% der freien Schwingungslänge und nicht mehr als 10% der freien Schwingungslänge von der Messrohrquerebene (EQ) beabstandet ist.

5. Messaufnehmer (1) nach einem der vorhergehenden Ansprüche, wobei eine der Komponenten des ersten elektrodynamischen Erregers (15) eine erste Erregerspule (15.1) aufweist, und wobei eine der Komponenten des zweiten elektrodynamischen Erregers (18) eine zweite Erregerspule (18.1) aufweist, wobei die Induktivität der ersten Erregerspule (15.1) nicht weniger als das Doppelte, insbesondere nicht weniger als das Vierfache der Induktivität der zweiten Erregerspule (18.1) beträgt.

6. Messaufnehmer (1) nach Anspruch 3, wobei die andere der Komponenten des ersten elektrodynamischen Erregers (15) einen ersten Magneten (15.2) aufweist, und wobei die andere Komponenten des zweiten elektrodynamischen Erregers (18) einen zweiten Magneten (18.2) umfasst, wobei eine orthogonale Projektion des ersten Magneten (15.2) und des zweiten Magneten (18.2) auf eine Ebene die senkrecht zur Schwingungsrichtung des mindestens einen Messrohrs verläuft, jeweils mit einer orthogonalen Projektion der ersten Erregerspule (15.1) bzw. der zweiten Erregerspule (18.1) auf diese Ebene überlappt, wobei die Fläche der überlappenden orthogonalen Projektionen der Komponenten des ersten elektrodynamischen Erregers mindestens das Doppelte, beispielsweise mindestens das Dreifache und insbesondere mindestens das Vierfache der Fläche der überlappenden orthogonalen Projektionen der Komponenten des zweiten elektrodynamischen Erregers beträgt.

7. Messaufnehmer nach einem der vorhergehenden Ansprüche, wobei der Abstand des zweiten elektrodynamischen Erregers von der ihm nächsten Sensoranordnung nicht weniger als das Vierfache, insbesondere nicht weniger als das Achtfache des Abstands des zweiten elektrodynamischen Erregers von dem ersten elektrodynamischen Erreger beträgt.

8. Messaufnehmer (1) nach einem der vorhergehenden Ansprüche, wobei eine Hauptträgheitsachse der ersten Erregerbaugruppe (11.1) in der Messrohrquerebene (EQ) verläuft.

9. Messaufnehmer (1) nach einem der vorhergehenden Ansprüche, **dadurch gekennzeichnet, dass** die erste Erregerbaugruppe (11.1) mittels einer Fügestelle an dem mindestens einen Messrohr (10.1) befestigt ist, wobei die Messrohrquerebene (EQ), durch einen Schwerpunkt der Fügestelle verläuft.

10. Messaufnehmer (1) nach einem der vorhergehenden Ansprüche, wobei die erste Erregerbaugruppe (11.1) einen ersten Trägerkörper (16.1) aufweist, an welchem die zweite Erregerspule (18.1) und der mindestens eine erste Ausgleichsmassenkörper (19.1) angeordnet sind, wobei der erste Trägerkörper (16.1) symmetrisch bezüglich der Messrohrquerebene (EQ) ausgebildet ist.

11. Messaufnehmer (1) nach einem der vorhergehenden Ansprüche, wobei der Oszillator (10) weiterhin ein zweites Messrohr (10.2) aufweist, wobei das erste Messrohr (10.1) und das zweite Messrohr (10.2) bezüglich einer Messaufnehmerlängsebene spiegelsymmetrisch zueinander verlaufen, wobei die Messaufnehmerlängsebene senkrecht zur Messrohrquerebene (EQ) verläuft.

12. Messaufnehmer (1) nach Anspruch 11, wobei die zweite Erregerbaugruppe (11.2) an dem zweiten Messrohr (10.2) gegenüber der ersten Erregerbaugruppe (11.1) befestigt ist, wobei der Schwerpunkt der zweiten Erregerbaugruppe (11.2) bis auf Fertigungstoleranzen in der Messrohrquerebene (EQ) liegt.

13. Messaufnehmer (1) nach Anspruch 11 oder 12, wobei eine Hauptträgheitsachse der zweiten Erregerbaugruppe (11.2) in der Messrohrquerebene (EQ) verläuft.

14. Messaufnehmer (1) nach einem der vorhergehenden Ansprüche, wobei die zweite Erregerbaugruppe (11.2) einen zweiten Trägerkörper (16.2) aufweist, an welchem der zweite Magnet (18.2) und ein zweiter Ausgleichsmassenkörper (19.2) angeordnet sind, wobei der zweite Trägerkörper (16.2) symmetrisch bezüglich der Messrohrquerebene (EQ) ausgebildet ist.

15. Messaufnehmer (1) nach einem der vorhergehenden Ansprüche, wobei die Mess- und Betriebsschaltung (70) dazu eingerichtet ist, die erste symmetrische Schwingungsmode und die erste antisymmetrische Schwingungsmode anzuregen, die Eigenfrequenzen der ersten symmetrischen Schwingungsmode und der ersten antisymmetrischen Schwingungsmode auf Basis der Eigenfrequenzen der ersten symmetrischen Schwingungsmode und der ersten antisymmetrischen Schwingungsmode einen Dichtemesswert oder Massedurchflussmesswert für ein in dem Messrohr geführtes Medium zu ermitteln, wobei der Dichtemesswert bzw. der Massedurchflussmesswert hinsichtlich eines Resonatoreffekts, aufgrund einer Gasbeladung des Mediums korrigiert ist.

## Claims

1. Vibronic transducer (1), comprising:
an oscillator (10) with at least one first measuring tube (10.1, 10,2) for guiding a medium;
at least one electrodynamic exciter arrangement (11) for exciting the oscillator (10) to bending oscillations of the at least one first measuring tube (10.1, 10, 2);
at least one sensor arrangement (12a) on the inlet side for detecting the bending vibrations of the at least one first measuring tube (10.1, 10, 2);
at least one sensor arrangement (12b) on the outlet side for detecting the bending vibrations of the at least one first measuring tube (10.1, 10, 2); and
a measuring and operating circuit (70) which is set up to apply at least one excitation signal to the electrodynamic exciter arrangement (11) and to detect sensor signals from the sensor arrangements (12a, 12b) on the inlet side and outlet side, and to determine a measured density value and/or a measured mass flow rate value on the basis of the sensor signals,
wherein the electrodynamic exciter arrangement has a first exciter assembly (11.1, 11.2) which is fastened to the at least one first measuring tube (10.1, 10.2), and a second exciter assembly (11.2) with respect to which the at least one first measuring tube is to be excited to oscillate, wherein the first exciter assembly (11.1, 11.2) has a center of gravity which, apart from manufacturing tolerances, lies in a measuring tube transverse plane (EQ) which extends perpendicularly to the at least one first measuring tube (10.1, 10.2).1, 11.2) has a center of gravity which, apart from manufacturing tolerances, lies in a measuring tube transverse plane (EQ) which runs perpendicular to the at least one first measuring tube (10.1, 10.2), and with respect to which the at least one first measuring tube (10.1, 10.2) has a substantially mirror-symmetrical course;
wherein the electrodynamic exciter arrangement (11) comprises a first electrodynamic exciter (15),
wherein the exciter arrangement (11) comprises a second electrodynamic exciter (18) and at least one first equalizing mass body (19.1, 19.2),
wherein the first exciter assembly comprises a first component of the first electrodynamic exciter and a first component of the second electrodynamic exciter and the first equalizing mass body,
wherein the second exciter assembly comprises a second component of the first electrodynamic exciter and a second component of the second electrodynamic exciter,
wherein the first electrodynamic exciter (18) is arranged to exert an excitation force (FE1) on the at least one first measuring tube (10.1, 10.2), which acts between the first and the second component of the first electrodynamic exciter, wherein an effective center of the first excitation force (FE1) is localized in the transverse plane (EQ) of the measuring tube,
the second electrodynamic exciter being set up to exert a second excitation force (FE2) on the at least one measuring tube (10.1, 10.2), which acts between the first and the second component of the second electrodynamic exciter, an effective center of the second excitation force (FE2) being localized outside the transverse plane (EQ) of the measuring tube,
wherein the measuring and operating circuit (70) is arranged to apply a first excitation signal only to the first electrodynamic exciter, the frequency of which corresponds to a current natural frequency of a symmetrical oscillation mode of the oscillator, and
wherein the measuring and operating circuit (70) is arranged to apply a second excitation signal only to the second electrodynamic exciter, the frequency of which corresponds to a current natural frequency of an antisymmetrical oscillation mode of the oscillator.

2. Measuring transducer (1) according to claim 1, wherein the first component of the second electrodynamic exciter has a first center of gravity, wherein the first balancing mass body has a second center of gravity, wherein a distance of a common center of gravity of the first center of gravity and the second center of gravity from the measuring tube transverse plane is not more than 5%, in particular not more than 2%, of the distance of the first center of gravity from the second center of gravity.

3. Measuring sensor (1) according to claim 1 or 2, wherein the total mass of the first component of the second electrodynamic exciter and of the first equalizing mass body is not more than one times, in particular not more than half, the mass of the first component of the first electrodynamic exciter.

4. Measuring transducer (1) according to one of claims 1 to 3, wherein the at least one first measuring tube (10.1, 10.2) has a free oscillation length extending between an inlet-side fixation of the measuring tube and an outlet-side fixation of the measuring tube (10.1, 10.2), wherein the center of the second excitation force FE2 is spaced not less than 1% of the free oscillation length and not more than 10% of the free oscillation length from the measuring tube transverse plane (EQ).

5. Measuring transducer (1) according to one of the preceding claims, wherein one of the components of the first electrodynamic exciter (15) comprises a first excitation coil (15.1), and wherein one of the components of the second electrodynamic exciter (18) comprises a second excitation coil (18.1), wherein the inductance of the first excitation coil (15.1) is not less than twice, in particular not less than four times, the inductance of the second excitation coil (18.1).

6. The transducer (1) according to claim 3, wherein the other of the components of the first electrodynamic exciter (15) comprises a first magnet (15.2), and wherein the other of the components of the second electrodynamic exciter (18) comprises a second magnet (18.2), wherein an orthogonal projection of the first magnet (15.2) and the second magnet (18.2) onto a plane perpendicular to the direction of oscillation of the at least one measuring tube is aligned with an orthogonal projection of the first excitation coil (15.1) or the second excitation coil (18.1) onto this plane, wherein the area of the overlapping orthogonal projections of the components of the first electrodynamic exciter is at least twice, for example at least three times and in particular at least four times the area of the overlapping orthogonal projections of the components of the second electrodynamic exciter.

7. Measuring sensor according to one of the preceding claims, wherein the distance of the second electrodynamic exciter from the sensor arrangement nearest to it is not less than four times, in particular not less than eight times, the distance of the second electrodynamic exciter from the first electrodynamic exciter.

8. Measuring sensor (1) according to one of the preceding claims, wherein a main axis of inertia of the first exciter assembly (11.1) extends in the transverse plane (EQ) of the measuring tube.

9. Measuring sensor (1) according to one of the preceding claims, **characterized in that** the first exciter assembly (11.1) is fastened to the at least one measuring tube (10.1) by means of a joining point, the transverse plane (EQ) of the measuring tube running through a centre of gravity of the joining point.

10. Measuring sensor (1) according to one of the preceding claims, wherein the first exciter assembly (11.1) has a first carrier body (16.1), on which the second exciter coil (18.1) and the at least one first equalizing mass body (19.1) are arranged, wherein the first carrier body (16.1) is designed symmetrically with respect to the measuring tube transverse plane (EQ).

11. Measuring transducer (1) according to one of the preceding claims, wherein the oscillator (10) further comprises a second measuring tube (10.2), wherein the first measuring tube (10.1) and the second measuring tube (10.2) extend mirror-symmetrically to each other with respect to a longitudinal plane of the measuring transducer, wherein the longitudinal plane of the measuring transducer extends perpendicular to the transverse plane (EQ) of the measuring tube.

12. Measuring sensor (1) according to claim 11, wherein the second exciter assembly (11.2) is fastened to the second measuring tube (10.2) opposite the first exciter assembly (11.1), wherein the center of gravity of the second exciter assembly (11.2) lies in the transverse plane (EQ) of the measuring tube except for manufacturing tolerances.

13. Measuring sensor (1) according to claim 11 or 12, wherein a main axis of inertia of the second exciter assembly (11.2) extends in the transverse plane (EQ) of the measuring tube.

14. Measuring sensor (1) according to one of the preceding claims, wherein the second exciter assembly (11.2) has a second carrier body (16.2), on which the second magnet (18.2) and a second equalizing mass body (19.2) are arranged, wherein the second carrier body (16.2) is designed symmetrically with respect to the transverse plane (EQ) of the measuring tube.

15. Measuring sensor (1) according to one of the preceding claims, wherein the measuring and operating circuit (70) is set up to excite the first symmetrical oscillation mode and the first antisymmetrical oscillation mode, to determine the natural frequencies of the first symmetrical oscillation mode and the first antisymmetrical oscillation mode on the basis of the natural frequencies of the first symmetrical oscillation mode and the first antisymmetrical oscillation mode a density measurement value or mass flow measurement value for a medium guided in the measuring tube, wherein the density measurement value or the mass flow measurement value is corrected with respect to a resonator effect due to a gas loading of the medium. the measured mass flow rate value is corrected with respect to a resonator effect due to gas loading of the medium.

## Revendications

1. Capteur vibratoire (1), comprenant :
un oscillateur (10) avec au moins un premier tube de mesure (10.1, 10, 2) pour guider un fluide ;
au moins un dispositif d'excitation électrodynamique (11) pour exciter l'oscillateur (10) en vibrations de flexion du au moins un premier tube de mesure (10.1, 10, 2) ;
au moins un agencement de capteurs (12a) côté entrée pour détecter les oscillations de flexion du au moins un premier tube de mesure (10.1, 10, 2) ;
au moins un agencement de capteurs (12b) côté sortie pour détecter les oscillations de flexion du au moins un premier tube de mesure (10.1, 10, 2) ; et
un circuit de mesure et de fonctionnement (70) qui est conçu pour appliquer au moins un signal d'excitation au dispositif d'excitation électrodynamique (11), et pour détecter des signaux de capteur des dispositifs de capteur (12a, 12b) côté entrée et côté sortie, et pour déterminer une valeur de mesure de densité et/ou une valeur de mesure de débit massique sur la base des signaux de capteur,
l'ensemble d'excitation électrodynamique comprenant un premier ensemble d'excitation (11.1, 11.2) fixé à l'au moins un premier tube de mesure (10.1, 10.2) et un deuxième ensemble d'excitation (11.2) par rapport auquel l'au moins un premier tube de mesure doit être excité pour osciller, le premier ensemble d'excitation (11.1, 11.2) ayant un axe de référence (EQ) qui est dans le prolongement de l'axe de référence (EQ).1, 11.2) présente un centre de gravité qui, à des tolérances de fabrication près, se situe dans un plan transversal de tube de mesure (EQ) qui s'étend perpendiculairement à l'au moins un premier tube de mesure (10.1, 10.2) et par rapport auquel l'au moins un premier tube de mesure (10.1, 10.2) présente un tracé essentiellement symétrique ;
dans lequel l'ensemble d'excitation électrodynamique (11) comprend un premier excitateur électrodynamique (15),
l'agencement d'excitation (11) comprenant un deuxième excitateur électrodynamique (18) et au moins un premier corps de masse d'équilibrage (19.1, 19.2),
dans lequel le premier ensemble d'excitation comprend un premier composant de la première excitatrice électrodynamique et un premier composant de la seconde excitatrice électrodynamique et le premier corps de masse d'équilibrage,
dans lequel le second ensemble d'excitation comprend un second composant du premier excitateur électrodynamique et un second composant du second excitateur électrodynamique,
dans lequel le premier excitateur électrodynamique (18) est adapté pour exercer une force d'excitation (FE1) sur le au moins un premier tube de mesure (10.1, 10.2) agissant entre les première et deuxième composantes du premier excitateur électrodynamique, un centre effectif de la première force d'excitation (FE1) étant localisé dans le plan transversal du tube de mesure (EQ),
dans lequel le second excitateur électrodynamique est adapté pour exercer une seconde force d'excitation (FE2) sur le au moins un tube de mesure (10.1, 10.2) agissant entre les premier et second composants du second excitateur électrodynamique, un centre effectif de la seconde force d'excitation (FE2) étant situé à l'extérieur du plan transversal du tube de mesure (EQ),
le circuit de mesure et de fonctionnement (70) étant conçu pour appliquer uniquement au premier excitateur électrodynamique un premier signal d'excitation dont la fréquence correspond à une fréquence propre actuelle d'un mode d'oscillation symétrique de l'oscillateur, et
le circuit de mesure et de fonctionnement (70) étant conçu pour appliquer uniquement au deuxième excitateur électrodynamique un deuxième signal d'excitation dont la fréquence correspond à une fréquence propre actuelle d'un mode d'oscillation antisymétrique de l'oscillateur.

2. Capteur de mesure (1) selon la revendication 1, dans lequel le premier composant du deuxième excitateur électrodynamique présente un premier centre de gravité, dans lequel le premier corps de masse d'équilibrage présente un deuxième centre de gravité, dans lequel une distance d'un centre de gravité commun du premier centre de gravité et du deuxième centre de gravité par rapport au plan transversal du tube de mesure n'est pas supérieure à 5%, en particulier pas supérieure à 2% de la distance du premier centre de gravité par rapport au deuxième centre de gravité.

3. Capteur de mesure (1) selon la revendication 1 ou 2, dans lequel la masse totale du premier composant du deuxième excitateur électrodynamique et du premier corps de masse d'équilibrage, n'est pas supérieure à une fois, en particulier pas supérieure à la moitié de la masse du premier composant du premier excitateur électrodynamique.

4. Capteur de mesure (1) selon l'une quelconque des revendications 1 à 3, dans lequel le au moins un premier tube de mesure (10.1, 10.2) présente une longueur d'oscillation libre qui s'étend entre une fixation côté entrée du tube de mesure et une fixation côté sortie du tube de mesure (10.1, 10.2), le centre de la deuxième force d'excitation FE2 n'étant pas inférieur à 1% de la longueur d'oscillation libre et pas supérieur à 10% de la longueur d'oscillation libre par rapport au plan transversal (EQ) du tube de mesure.

5. Capteur de mesure (1) selon l'une des revendications précédentes, dans lequel l'un des composants de la première excitation électrodynamique (15) comprend une première bobine d'excitation (15.1), et dans lequel l'un des composants de la deuxième excitation électrodynamique (18) comprend une deuxième bobine d'excitation (18.1), l'inductance de la première bobine d'excitation (15.1) n'étant pas inférieure au double, en particulier pas inférieure au quadruple de l'inductance de la deuxième bobine d'excitation (18.1).

6. Capteur de mesure (1) selon la revendication 3, dans lequel l'autre des composants du premier excitateur électrodynamique (15) comprend un premier aimant (15.2), et dans lequel l'autre des composants du deuxième excitateur électrodynamique (18) comprend un deuxième aimant (18.3).2), une projection orthogonale du premier aimant (15.2) et du deuxième aimant (18.2) sur un plan perpendiculaire à la direction d'oscillation du au moins un tube de mesure coïncidant respectivement avec une projection orthogonale de la première bobine d'excitation (15.1) ou de la deuxième bobine d'excitation (18.1) sur ce plan, la surface des projections orthogonales en chevauchement des composants de la première excitation électrodynamique étant au moins le double, par exemple au moins le triple et en particulier au moins le quadruple de la surface des projections orthogonales en chevauchement des composants de la deuxième excitation électrodynamique.

7. Capteur de mesure selon l'une des revendications précédentes, dans lequel la distance entre le deuxième excitateur électrodynamique et l'ensemble de capteurs le plus proche de lui n'est pas inférieure à quatre fois, en particulier pas inférieure à huit fois, la distance entre le deuxième excitateur électrodynamique et le premier excitateur électrodynamique.

8. Capteur de mesure (1) selon l'une des revendications précédentes, dans lequel un axe principal d'inertie du premier ensemble d'excitation (11.1) s'étend dans le plan transversal du tube de mesure (EQ).

9. Capteur de mesure (1) selon l'une des revendications précédentes, **caractérisé en ce que** le premier module d'excitation (11.1) est fixé au moyen d'un point d'assemblage à l'au moins un tube de mesure (10.1), le plan transversal (EQ) du tube de mesure passant par un centre de gravité du point d'assemblage.

10. Capteur de mesure (1) selon l'une des revendications précédentes, dans lequel le premier module d'excitation (11.1) présente un premier corps de support (16.1) sur lequel sont disposés la deuxième bobine d'excitation (18.1) et le au moins un premier corps de masse d'équilibrage (19.1), le premier corps de support (16.1) étant réalisé symétriquement par rapport au plan transversal du tube de mesure (EQ).

11. Capteur de mesure (1) selon l'une des revendications précédentes, dans lequel l'oscillateur (10) comporte en outre un deuxième tube de mesure (10.2), le premier tube de mesure (10.1) et le deuxième tube de mesure (10.2) s'étendant symétriquement l'un par rapport à l'autre par rapport à un plan longitudinal du capteur de mesure, le plan longitudinal du capteur de mesure étant perpendiculaire au plan transversal (EQ) du tube de mesure.

12. Capteur de mesure (1) selon la revendication 11, dans lequel le deuxième module d'excitation (11.2) est fixé au deuxième tube de mesure (10.2) en face du premier module d'excitation (11.1), le centre de gravité du deuxième module d'excitation (11.2) étant situé dans le plan transversal du tube de mesure (EQ), à des tolérances de fabrication près.

13. Capteur de mesure (1) selon la revendication 11 ou 12, dans lequel un axe d'inertie principal du deuxième ensemble d'excitation (11.2) s'étend dans le plan transversal du tube de mesure (EQ).

14. Capteur de mesure (1) selon l'une des revendications précédentes, dans lequel le deuxième module d'excitation (11.2) présente un deuxième corps de support (16.2) sur lequel sont disposés le deuxième aimant (18.2) et un deuxième corps de masse d'équilibrage (19.2), le deuxième corps de support (16.2) étant réalisé symétriquement par rapport au plan transversal du tube de mesure (EQ).

15. Capteur de mesure (1) selon l'une des revendications précédentes, dans lequel le circuit de mesure et de fonctionnement (70) est adapté pour exciter le premier mode d'oscillation symétrique et le premier mode d'oscillation antisymétrique, pour déterminer les fréquences propres du premier mode d'oscillation symétrique et du premier mode d'oscillation antisymétrique sur la base des fréquences propres du premier mode d'oscillation symétrique et du premier mode d'oscillation antisymétrique, une valeur de mesure de la densité ou une valeur de mesure du débit massique pour un milieu guidé dans le tube de mesure, la valeur de mesure de la densité ou la valeur de mesure du débit massique étant corrigée par rapport à la valeur de mesure de la densité ou du débit massique. la valeur de mesure du débit massique est corrigée en ce qui concerne un effet de résonance dû à une charge de gaz du milieu.
